(19) Europäisches Patentamt / European Patent Office / Office européen des brevets

(11) **EP 4 683 330 A1**

(12) **EUROPEAN PATENT APPLICATION**
published in accordance with Art. 153(4) EPC

(43) Date of publication:
**21.01.2026 Bulletin 2026/04**

(21) Application number: **24774076.4**

(22) Date of filing: **18.03.2024**

(51) International Patent Classification (IPC):
**H04N 21/2187** *(2011.01)*    **H04N 21/472** *(2011.01)*
**H04N 21/4788** *(2011.01)*    **H04N 21/431** *(2011.01)*

(86) International application number:
**PCT/CN2024/082241**

(87) International publication number:
**WO 2024/193511 (26.09.2024 Gazette 2024/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.03.2023 CN 202310274165**

(71) Applicant: **Beijing Zitiao Network Technology Co.,
Ltd.**
**Beijing 100190 (CN)**

(72) Inventor: **CHANG, Jianfei**
**Beijing 100028 (CN)**

(74) Representative: **Isarpatent
Patent- und Rechtsanwälte Partg mbB
Friedrichstraße 31
80801 München (DE)**

(54) **INTERACTION METHOD AND APPARATUS, AND ELECTRONIC DEVICE AND COMPUTER-READABLE MEDIUM**

(57)    An interaction method and apparatus, and an electronic device and a computer-readable medium. The method comprises: when a co-hosting page is being presented and the co-hosting page comprises a user presentation interface of at least one co-hosting user, and after a gift sending request which is triggered for a target user among co-hosting users and used for requesting that a target gift is sent to the target user is received, presenting the target gift, an animated-effect object corresponding to the target gift, and a trajectory object corresponding to the target gift. In this way, gift interactions are enriched, thereby improving the user experience.

Present a co-hosting page, wherein the co-hosting page comprises a user presentation interface of at least one co-hosting user — S1

Receive a gift sending request which is triggered for a target user among the at least one co-hosting user, wherein the gift sending request is used for requesting that a target gift is sent to the target user — S2

Present the target gift, an animated-effect object corresponding to the target gift, and a trajectory object corresponding to the target gift, wherein the trajectory object is used for presenting a gift movement trajectory corresponding to the target gift; a trajectory start point of the gift movement trajectory is located within a presentation area of the animated-effect object; and a trajectory end point of the gift movement trajectory is determined according to the position of a user presentation interface of the target user — S3

Fig. 1

**Description**

The present application claims priority of the Chinese Patent Application No. 202310274165.7 filed on March 17, 2023, the application of which is incorporated herein by reference in its entirety as part of the present application.

TECHNICAL FIELD

The present disclosure relates to a method and an apparatus of interacting, an electronic device and a computer-readable medium.

BACKGROUND

In related technologies, when displaying a multi-person co-hosting live page, viewers of the multi-person co-hosting live page may send gifts to one or more co-hosting participators on the co-hosting live page.

However, there are still some shortcomings in the known gift interaction solution, which affect user experience.

SUMMARY

In order to solve the above-described technical problems, the present disclosure provides a method and apparatus of interacting, an electronic device and a computer-readable medium that may improve user experience.

In order to achieve the above-described purposes, the technical solution provided by the present disclosure is as follows:

The present disclosure provides a method of interacting, the method including:

displaying a co-hosting page, the co-hosting page including a user display interface of at least one co-hosting user;
receiving a gift sending request triggered for a target user of the at least one co-hosting user, the gift sending request being used for requesting to send a target gift to the target user; and
displaying the target gift, an animation effect object corresponding to the target gift, and a trajectory object corresponding to the target gift. The trajectory object is used for displaying a gift movement trajectory corresponding to the target gift, a trajectory start point of the gift movement trajectory is located within a display region of the animation effect object, and a trajectory end point of the gift movement trajectory is determined according to a position of a user display interface of the target user.

In a possible embodiment, position representation data of the trajectory start point is determined according to a display scaling ratio of the animation effect object, actual display position coordinates of the animation effect object under a page coordinate system corresponding to the co-hosting page, and preset position coordinates of the trajectory start point under an object coordinate system corresponding to the animation effect object.

In a possible embodiment, a determination process of the display scaling ratio includes:
determining the display scaling ratio of the animation effect object, according to an actual display size of the animation effect object on the co-hosting page and a preset size of the animation effect object.

In a possible embodiment, a determination process of the position representation data of the trajectory start point, includes:

scaling a preset position coordinates of the trajectory start point under the object coordinate system, according to the display scaling ratio, to obtain scaled position coordinates, the object coordinate system being constructed based on the animation effect object having the preset size; and
performing coordinate system conversion processing on the scaled position coordinates by using the actual display position coordinates of the animation effect object under the page coordinate system, to obtain the position representation data of the trajectory start point.

In a possible embodiment, a construction process of the trajectory object includes:

determining position representation data of a trajectory center point, a trajectory length, and a trajectory tilt angle, according to the position representation data of the trajectory start point and the position representation data of the trajectory end point;
constructing an initial trajectory representation object according to the position representation data of the trajectory center point and the trajectory length;
determining a rotation angle corresponding to the initial trajectory representation object, by using the trajectory tilt angle;
rotating the initial trajectory representation object by the rotation angle, to obtain a target trajectory representation object; and
generating the trajectory object, according to the target trajectory representation object.

In a possible embodiment, the trajectory tilt angle is determined according to a slope of a line connecting the trajectory start point and the trajectory end point;
and/or,
the trajectory length is determined according to a distance between the trajectory start point and the trajectory end point.

In a possible embodiment, a count of target users is N, where N is a positive integer;

the displaying the target gift, an animation effect object corresponding to the target gift, and a trajectory object corresponding to the target gift, includes:
displaying N target gifts, one animation effect object, and N trajectory objects; trajectory start points corresponding to the respective trajectory objects being located in the same position, and trajectory end points corresponding to the respective trajectory objects being respectively determined according to positions of the user display interfaces of the respective target users.

In a possible embodiment, the method of interacting is applied to a terminal device;

at least one of the group consisting of the animation effect object, the trajectory object or the target gift belongs to animation data;
when at least one frame of animation image corresponding to the respective pieces of animation data is stored in a preset storage space of the terminal device, a display process of the respective pieces of animation data includes:
reading the at least one frame of animation image corresponding to the respective pieces of animation data from the preset storage space and displaying the at least one frame of animation image.

In a possible embodiment, before the reading the at least one frame of animation image corresponding to the respective pieces of animation data from the preset storage space and displaying the at least one frame of animation image, the method further includes:

acquiring animation instances corresponding to the respective pieces of animation data;
performing frame animation decoding processing on the respective animation instances, to obtain the at least one frame of animation image corresponding to the respective pieces of animation data; and
storing the at least one frame of animation image corresponding to the respective pieces of animation data into the preset storage space.

In a possible embodiment, the trajectory object is a trajectory animation displayed in a tiled manner from the trajectory start point to the trajectory end point;
and/or,
the display region of the animation effect object is a bottom center region of the co-hosting page

The present disclosure provides an apparatus of interacting, including:

a first displaying unit, configured to display a co-hosting page, the co-hosting page including a user display interface of at least one co-hosting user;
a request receiving unit, configured to receive a gift sending request triggered for a target user of the at least one co-hosting user, the gift sending request being used for requesting to send a target gift to the target user; and
a second displaying unit, configured to display the target gift, an animation effect object corresponding to the target gift, and a trajectory object corresponding to the target gift. The trajectory object is used for displaying a gift movement trajectory corresponding to the target gift; a trajectory start point of the gift movement trajectory is located within a display region of the animation effect object, and a trajectory end point of the gift movement trajectory is determined according to a position of a user display interface of the target user.

The present disclosure provides an electronic device, the device including: a processor and a memory;

the memory is configured to store instructions or computer programs;
the processor is configured to execute the instructions or the computer programs in the memory, so that the electronic device executes the method of interacting provided by the present disclosure.

The present disclosure provides a computer-readable medium, having instructions or computer programs stored therein. The instructions or the computer programs, when running on a device, cause the device to execute the method of interacting provided by the present disclosure.

The present disclosure provides a computer program product, including a computer program carrying on a non-transient computer-readable medium. The computer program contains program codes configured to execute the method of interacting provided by the present disclosure.

BRIEF DESCRIPTION OF DRAWINGS

To describe the technical solutions in the embodiments of the present disclosure more clearly, the accompanying drawings required in the description of the embodiments will be described briefly below. Apparently, the accompanying drawings described below are only some embodiments recorded in the present disclosure, and other accompanying drawings can also be derived from these drawings by those ordinarily skilled in the art without creative efforts

Fig. 1 is a flow chart of a method of interacting provided by an embodiment of the present disclosure;
Fig. 2 is a schematic diagram of a co-hosting page provided by an embodiment of the present disclosure;
Fig. 3 is a schematic diagram of another co-hosting page provided by the embodiment of the present disclosure;
Fig. 4 is a schematic diagram of a page coordinate system provided by the embodiment of the present disclosure;
Fig. 5 is a schematic diagram of an object coordinate system provided by the embodiment of the present disclosure;
Fig. 6 is a schematic diagram of another co-hosting page provided by the embodiment of the present disclosure;
Fig. 7 is a structural schematic diagram of an apparatus of interacting provided by an embodiment of the present disclosure; and
Fig. 8 is a structural schematic diagram of an electronic device provided by an embodiment of the present disclosure.

DETAILED DESCRIPTION

Through study, it is found that with respect to a co-hosting live page, viewers of the page may send gifts to one or more co-hosting participators displayed on the page. However, in some related technical solutions, a gift sending display mode involved therein usually relies on some characters (e.g., a string "User A sends a rose to user B") for display; and such display mode is monotonous, which affects user experience.

Based on the above-described findings, in order to solve the technical problems shown in the background section, an embodiment of the present disclosure provides an interacting method; the method includes: displaying a target gift, an animation effect object (e.g., an MP4 animation, etc.) corresponding to the target gift, and a trajectory object corresponding to the target gift, to a client having a co-hosting display function, when the client is displaying a co-hosting page, and the co-hosting page includes a user display interface of at least one co-hosting user, after receiving a gift sending request triggered for a target user of these co-hosting users and used for requesting to send the target gift to the target user. The trajectory object is used for displaying a gift movement trajectory corresponding to the target gift, so that the co-hosting page displays a user display interface on which the target gift gradually move along the trajectory object toward the target user, which enriches gift interaction and improves user experience.

It may be seen that the above trajectory object is used for describing the gift movement trajectory of the target gift, so that the trajectory object may not only clearly display a trajectory start point and a trajectory end point involved in the gift movement trajectory, but also clearly display an actual movement route of the target gift in the co-hosting page.

In addition, a display moment of the trajectory object is earlier than or equal to a movement start moment of the above target gift, so the trajectory object may display an actual movement route of the target gift to the user in advance, so that the user may know in advance the trajectory along which the target gift moves to the end position, which is favorable for improving user experience.

In addition, an execution subject of the above-described method of interacting will not be limited in the embodiment of the present disclosure; for example, the method of interacting provided by the embodiment of the present disclosure may be executed by an electronic device. The electronic device includes but is not limited to a smart phone, a tablet personal computer, a laptop, a personal digital assistant (PDA), etc.

Moreover, an application scenario of the above method of interacting will not be limited in the embodiment of the present disclosure; for example, the method of interacting provided by the embodiment of the present disclosure may be applied to any type of multi-person co-hosting live scenario.

In order to make those skilled in the art to better understand the solution of the present disclosure, the technical solutions in the embodiments of the present disclosure will be described in a clearly and fully understandable way in conjunction with the accompanying drawings related to the embodiments of the present disclosure. It is obvious that the described embodiments are just a part but not all of the embodiments of the present disclosure. Based on the described embodiments herein, those ordinarily skilled in the art can acquire other embodiment(s), without any inventive effort, which should be within the scope of the present disclosure.

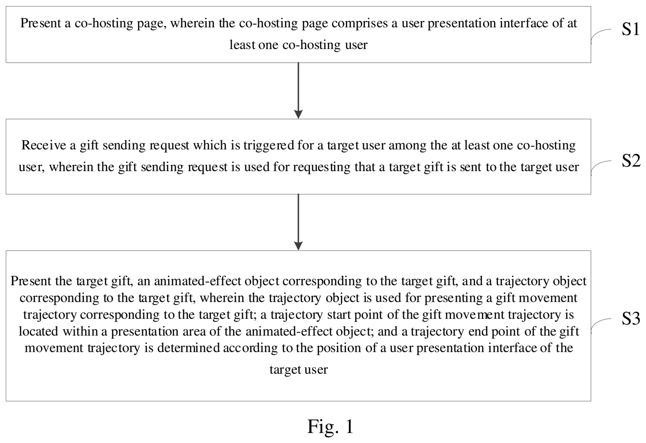

In order to better understand the technical solution provided by the present disclosure, the method of interacting provided by the present disclosure will be illustrated below in conjunction with some accompanying drawings firstly. As shown in Fig. 1, the method of interacting provided by the embodiment of the present disclosure may include S1 to S3 below. Fig. 1 is a flow chart of the method of interacting provided by the embodiment of the present disclosure.

S1: displaying a co-hosting page, the co-hosting page including a user display interface of at least one co-hosting user.

The co-hosting page is used for displaying a co-hosting interactive process between at least two persons; moreover, the co-hosting page will not be limited in the embodiment of the present disclosure; for example, it may be a co-hosting live page in any type of multi-person co-hosting live scenario (e.g., a multi-person co-hosting voice scenario, a multi-person co-hosting video scenario, etc.).

In addition, a user display interface of at least one co-hosting user is displayed on the above co-hosting page. A user display interface of an m-th co-hosting user is used for displaying a co-hosting state of the m-th co-hosting user, where m is a positive integer, $m \leq M$, M is a positive integer, and M represents the count of the above "at least one co-hosting user".

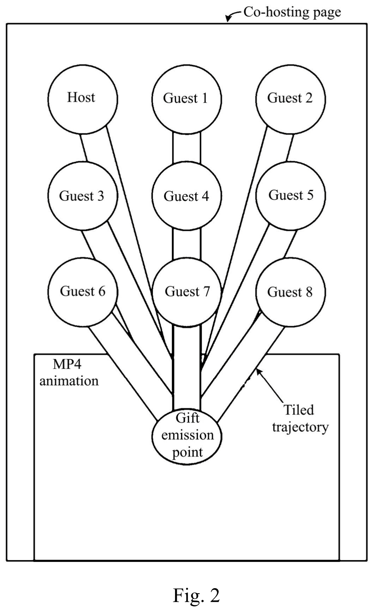

It should be noted that the above "at least one co-hosting user will not be limited in the embodiment of the present disclosure; for example, when the above co-hosting page is a co-hosting live page of a certain live room (e.g., the co-hosting page shown in Fig. 2), the "at least one co-hosting user" may include a host within the live room and all guests participating in the co-hosting within the live room (e.g., guest 1 to guest 8 shown in Fig. 2, etc.). The guest participating in the co-hosting refers to a viewer who is performing the co-hosting successfully with the host.

It should also be noted that the above co-hosting state includes but is not limited to at least one of a co-hosting voice state and a co-hosting display state. A co-hosting voice state of the m-th co-hosting user includes a voice state of the m-th co-hosting user during co-hosting (e.g., whether voice is enabled or not). A co-hosting display state of the m-th co-hosting user includes a video state of the m-th co-hosting user during co-hosting (e.g., whether a video picture is displayed, a display effect of the video picture, a display content of the video picture, etc.).

In addition, the above "user display interface of the m-th co-hosting user" will not be limited in the embodiment of the present disclosure. For ease of understanding, it will be illustrated below in conjunction with two examples.

Example 1: in some application scenarios (e.g., multi-person co-hosting voice scenarios), the above "user display interface of the m-th co-hosting user" may be used for displaying a user identifier image of the m-th co-hosting user. The user identifier image is used for identifying the m-th co-hosting user.

Example 2: in some application scenarios (e.g., multi-person co-hosting video scenarios), the above "user display interface of the m-th co-hosting user" may be at least used for displaying the video picture of the m-th co-hosting user.

Based on the relevant content of the above S1, it may be known that with respect to an electronic device having a live display function, in some multi-person co-hosting live scenarios (e.g., multi-person co-hosting voice scenarios, multi-person co-hosting video scenarios, etc.), the electronic device may be used for displaying a co-hosting page, and user display interfaces of a plurality of co-hosting users may be displayed on the co-hosting page, so that a user of the electronic device may view co-hosting states of the respective co-hosting users on the co-hosting page.

S2: receiving a gift sending request triggered for a target user of the at least one co-hosting user, the gift sending request being used for requesting to send a target gift to the target user.

The target user refers to a co-hosting user selected by a sender of the target gift from the above "at least one co-hosting user" for receiving the target gift. For example, when the above "at least one co-hosting user" includes the host as well as guest 1 to guest 8 shown in Fig. 2, the target user may be the host.

In addition, the count of the above target users will not be limited in the embodiment of the present disclosure, for example, it may be N, where N is a positive integer.

In addition, the above "sender of the target gift" will not be limited in the embodiment of the present disclosure, for example, it may be any viewer of the co-hosting page except the above target user. It may be seen that when the above "at least one co-hosting user" includes the host as well as guest 1 to guest 8 shown in Fig. 2, and the above target user is the host shown in Fig. 2, the "sender of the target gift" may be any guest of guest 1 to guest 8 shown in Fig. 2, or any ordinary viewer viewing the co-hosting page shown in Fig. 2. The ordinary viewer refers to a viewer who has no co-hosting relationship with the host and is currently viewing the co-hosting page.

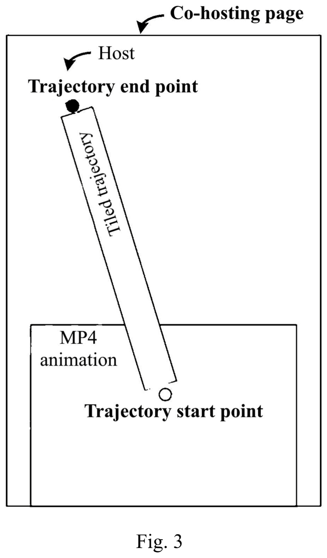

Further, the above "target gift" will not be limited in the embodiment of the present disclosure, for example, it may refer to a gift (e.g., the gift shown in Fig. 3) that may be subjected to sending display by means of an animation effect object (e.g., the MP4 animation shown in Fig. 3, etc.) and a trajectory object (e.g., a tiled trajectory shown in Fig. 3, etc.) as shown below. It should be noted that the relevant content of S3 below may be referred to for relevant content of the "animation effect object" and the "trajectory object".

The above "gift sending request" is used for requesting to send the target gift to one or more target users; moreover, a trigger mode of the "gift sending request" will not be limited in the embodiment of the present disclosure; for example, it may be implemented by using any known or future method that may trigger the gift sending request.

S3: displaying the target gift, the animation effect object corresponding to the target gift, and the trajectory object corresponding to the target gift. The trajectory object is used for displaying a gift movement trajectory corresponding to the target gift; a trajectory start point of the gift movement trajectory is located within a display region of the animation effect object, and a trajectory end point of the gift movement trajectory is determined according to a position of the user display interface of the target user.

The animation effect object refers to an object having an emission function and requiring dynamic display, so that the animation effect object may dynamically display an emission base involved in the target gift (e.g., a cannon barrel having a radiation emission function, etc.).

In addition, the above animation effect object will not be limited in the present disclosure, for example, it may be a Moving Picture Experts Group 4 (MP4) animation shown in Fig. 3.

In addition, the animation effect object may be displayed within a target region of the co-hosting page; and the target region will not be limited in the present disclosure, for example, it may be a bottom center region of the co-hosting page (e.g., a region where the MP4 animation shown in Fig. 2 is located). It may be seen that in one possible implementation, the display region of the animation effect object is the bottom center region of the co-hosting page. The "display region of the animation effect object" refers to a region occupied by the animation effect object when displayed on the co-hosting page.

The trajectory object is used for describing the gift movement trajectory corresponding to the target gift, so that the trajectory object may clearly represent the trajectory along which the object (e.g., cake, ray, etc.) emitted by the above animation effect object moves toward the target user.

In addition, the above trajectory object will not be limited in the present disclosure, for example, it may specifically be: a trajectory animation that is displayed in a tiled manner from the trajectory start point of the gift movement trajectory to the trajectory end point of the gift movement trajectory (e.g., an animation that dynamically displays the tiled trajectory in a tiled manner shown in Fig. 3). It should be noted that an implementation of the trajectory animation will not be limited in the present disclosure, for example, it may be implemented in a trace mode, so that the trajectory animation may dynamically display a process in which the gift movement trajectory gradually appears on the co-hosting page. For another example, it may be implemented in a color change mode, so that the trajectory animation may dynamically display a color change process of the gift movement trajectory that is directly and fully displayed on the co-hosting page.

In addition, the trajectory object is determined according to the trajectory start point (e.g., the trajectory start point shown in Fig. 3) and the trajectory end point (e.g., the trajectory end point shown in Fig. 3) of the above gift movement trajectory; wherein the trajectory start point is located within the above "display region of the animation effect object", and the trajectory end point is determined according to the position of the user display interface of the target user, so that the trajectory object may accurately represent the tiled trajectory from the "display region of the animation effect object" to the user display interface of the target user.

It should be noted that an implementation of the above trajectory end point will not be limited in the present disclosure, for example, in one possible implementation, in order to better improve a display effect of the trajectory object, the trajectory end point may be located within the user display interface of the above target user, which may effectively avoid interference between trajectory animations and is favorable for improving the display effect of the trajectory object.

In addition, a determination process of the above trajectory object will not be limited in the present disclosure, for example, it may include step 11 to step 15 below.

Step 11: determining position representation data of a trajectory center point, a trajectory length, and a trajectory tilt angle, according to position representation data of the trajectory start point and position representation data of the trajectory end point.

The above "position representation data of the trajectory start point" is used for representing a position of the trajectory start point on the co-hosting page.

In addition, a determination process of the above "position representation data of the trajectory start point" will not be limited in the present disclosure, for example, it may be preset.

Actually, different terminal devices may have different screen sizes, so sizes of co-hosting pages displayed on different terminal devices may also be different. Therefore, in order to better improve a gift display effect, an actual display size of the above animation effect object on the co-hosting page will be adaptively adjusted according to the size of the co-hosting page, so that a size of the region occupied by the animation effect object on the co-hosting page will also be adaptively adjusted according to the size of the co-hosting page, and thus an actual position of the trajectory start point located within the region on the co-hosting page may change.

Based on the foregoing content, it may be seen that in order to better improve user experience, the present disclosure further provides a determination process of the above "position representation data of the trajectory start point"; and it may specifically be: determining the position representation data of the trajectory start point, according to a display scaling ratio of the above animation effect object, actual display position coordinates of the animation effect object under the page coordinate system corresponding to the co-hosting page, and preset position coordinates of the trajectory start point under the object coordinate system corresponding to the animation effect object. For ease of understanding, detailed illustration will be provided below in conjunction with step 21 to step 24.

As an example, the determination process of the above "position representation data of the trajectory start point" may include step 21 to step 24 below.

Step 21: acquiring a preset size of the animation effect object, an actual display size of the animation effect object on the co-hosting page, and actual display position coordinates of the animation effect object under the page coordinate system, the page coordinate system being constructed based on a first preset position on the co-hosting page.

The preset size of the animation effect object refers to a size set in advance for the animation effect object. For example, the "preset size of the animation effect object" may include $W_d$ and $H_d$. $W_d$ represents a width set in advance for the animation effect object; and $H_d$ represents a height set in advance for the animation effect object.

The above "actual display size of the animation effect object on the co-hosting page" refers to a size of the animation effect object when the animation effect object is displayed on the co-hosting page. For example, the "actual display size of the animation effect object on the co-hosting page" may include $W_a$ and $H_a$. $W_a$ represents a width of the animation effect object when the animation effect object is displayed on the co-hosting page; and $H_a$ represents a height of the animation effect object when the animation effect object is displayed on the co-hosting page.

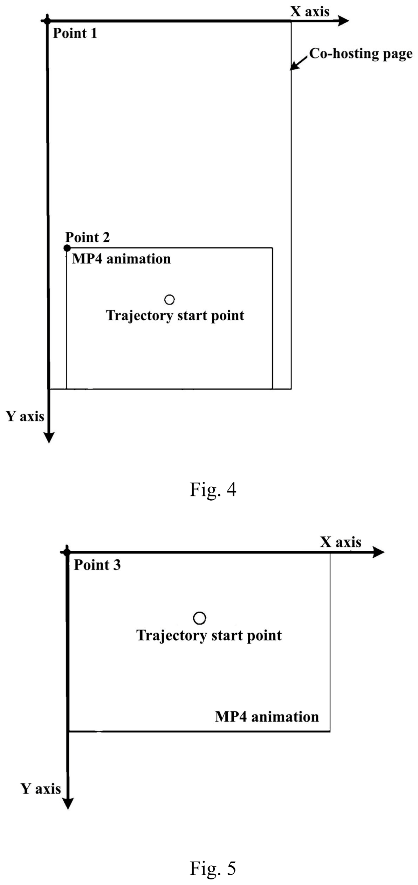

The above "page coordinate system" refers to a coordinate system constructed for the co-hosting page (e.g., the coordinate system shown in Fig. 4), so that the page coordinate system may be used for representing coordinates of any point on the co-hosting page; moreover, the page coordinate system is constructed based on the first preset position (e.g., point 1 shown in Fig. 4) on the co-hosting page, so that the respective coordinates under the page coordinate system are all determined with the first preset position as an origin. The first preset position may be preset, for example, it may specifically be an upper left corner of the co-hosting page.

The above "actual display position coordinates of the animation effect object under the page coordinate system" are used for representing a relative position between the animation effect object and the co-hosting page; moreover, an implementation of the "actual display position coordinates of the animation effect object under the page coordinate system" will not be limited in the present disclosure; for example, it may be implemented by adopting the actual display position coordinates of the upper left corner of the animation effect object (e.g., point 2 shown in Fig. 4) under the page coordinate system. It may be seen that in one possible implementation, the "actual display position coordinates of the animation effect object under the page coordinate system" may include $M_x$ and $M_y$. $M_x$ represents an X-axis value of the upper left corner of the animation effect object under the page coordinate system; and $M_y$ represents a Y-axis value of the upper left corner of the animation effect object under the page coordinate system.

Step 22: determining the display scaling ratio of the animation effect object, according to the actual display size of the animation effect object on the co-hosting page and the preset size of the animation effect object.

The display scaling ratio refers to a scaling ratio used when the animation effect object is displayed on the co-hosting page, so that the display scaling ratio may represent a relative size between the animation effect object displayed on the co-hosting page and the preset animation effect object.

In addition, an implementation of the above display scaling ratio will not be limited in the present disclosure; for example, it may include a width scaling ratio and a height scaling ratio. For example, when the above "preset size of the animation effect object" includes $W_d$ and $H_d$, and the above "actual display size of the animation effect object on the co-hosting page" includes $W_a$ and $H_a$, the width scaling ratio=$W_a/W_d$, and the height scaling ratio=$H_a/H_d$.

In addition, a determination process of the above display scaling ratio will not be limited in the present disclosure; for example, the display scaling ratio is determined, according to the ratio of the actual display size of the animation effect object on the co-hosting page to the preset size of the animation effect object.

Step 23: scaling the preset position coordinates of the trajectory start point under the object coordinate system, according to the above display scaling ratio, to obtain the scaled position coordinates, the object coordinate system being constructed based on a second preset position in the animation effect object having the preset size.

The object coordinate system refers to a coordinate system constructed based on a preset animation effect object (e.g., the coordinate system shown in Fig. 5), so that the object coordinate system may be used for representing coordinates of any point in a region where the animation effect object is located; moreover, the object coordinate system is constructed based on the second preset position in the animation effect object having the preset size (i.e., the object coordinate system is constructed based on the second preset position within the preset animation effect object), so that the respective coordinates under the object coordinate system are all determined with the second preset position as an origin. The second preset position may be preset, for example, it may specifically be the upper left corner of the preset animation effect object (e.g., point 3 shown in Fig. 5).

The above "preset position coordinates of the trajectory start point under the object coordinate system" are used for representing a relative position between the preset trajectory start point and the preset animation effect object (e.g., a relative position between the trajectory start point and the upper left corner of the preset animation effect object). For example, the "preset position coordinates of the trajectory start point under the object coordinate system" may include $G_x$ and $G_y$. $G_x$ represents an X-axis value of the trajectory start point under the object coordinate system; and $G_y$ represents a Y-axis value of the trajectory start point under the object coordinate system.

The above "scaled position coordinates" refer to a scaled processing result of the above "preset position coordinates of the trajectory start point under the object coordinate system", so that the scaled position coordinates may represent a relative position between the trajectory start point and the animation effect object displayed on the co-hosting page (e.g., a relative position between the trajectory start point and the upper left corner of the animation effect object displayed on the co-hosting page). For example, the "scaled position coordinates" include $F_x$ and $F_y$. $F_x = G_x \times (W_a/W_d)$, so that $F_x$ represents a relative position in a horizontal direction between the trajectory start point and the upper left corner of the animation effect object displayed on the co-hosting page; $F_y = G_y \times (H_a/H_d)$, so that $F_y$ represents a relative position in a vertical direction between the trajectory start point and the upper left corner of the animation effect object displayed on the co-hosting page.

Step 24: performing coordinate system conversion processing on the scaled position coordinates by adopting the above actual display position coordinates (as shown in formulas (1) to (2) below), to obtain the position representation data of the trajectory start point, so that the position representation data is used for representing the position coordinates of the trajectory start point presented under the page coordinate system.

$$S_x = M_x + G_x \times \frac{W_a}{W_d} \qquad (1)$$

$$S_y = M_y + G_y \times \frac{H_a}{H_d} \qquad (2)$$

In the formula, $(S_x, S_y)$ represents the position representation data of the trajectory start point; $S_x$ represents the X-axis value of the trajectory start point under the page coordinate system; $S_y$ represents the Y-axis value of the trajectory start point under the page coordinate system; $(M_x, M_y)$ represents the above "actual display position coordinates of the animation effect object under the page coordinate system" (e.g., the actual display position coordinates of the upper left corner of the animation effect object under the page coordinate system); $M_x$ represents the X-axis value of the upper left corner of the animation effect object under the page coordinate system; $M_y$ represents the Y-axis value of the upper left corner of the animation effect object under the page coordinate system; $G_x$ represents the X-axis value of the trajectory start point under the above object coordinate system; $G_y$ represents the Y-axis value of the trajectory start point under the object coordinate system; $W_d$ represents a width set in advance for the animation effect object; $H_d$ represents a height set in advance for the animation effect object; $W_a$ represents a width of the animation effect object when the animation effect object is displayed on the co-hosting page; and $H_a$ represents a height of the animation effect object when the animation effect object is displayed on the co-hosting page.

Based on the relevant content of step 21 to step 24 above, it may be known that in some application scenarios, the coordinate system conversion processing may be performed on the preset position coordinates of the trajectory start point under the object coordinate system, according to the size set in advance for the animation effect object, the actual display size of the animation effect object presented on the co-hosting page, the actual display position coordinates of the upper left corner of the animation effect object under the page coordinate system, and the above formulas (1) to (2), to obtain the position representation data of the trajectory start point, so that the position representation data may represent the position coordinates of the trajectory start point presented under the page coordinate system. In this way, the position coordinates of the trajectory start point presented in the preset animation effect object may be converted into the position coordinates of the trajectory start point displayed on the co-hosting page, so as to achieve the purpose of determining the actual position coordinates of the trajectory start point presented under the page coordinate system based on the actual size information of the co-hosting page. In this way, the impact caused by inconsistent screen sizes of displaying devices of the co-hosting page may be effectively overcome, which is favorable for improving a trajectory display effect.

The above "position representation data of the trajectory end point" is used for representing the position of the trajectory end point on the co-hosting page; and the "position representation data of the trajectory end point" will not be limited in the present disclosure, for example, it may refer to any position (e.g., the center position) within the user display interface of the target user.

The above "position representation data of the trajectory center point" is used for representing the position of the center point of the gift movement trajectory corresponding to the above target gift on the co-hosting page; and the "position representation data of the trajectory center point" may be determined according to the position representation data of the above trajectory start point and the position representation data of the above trajectory end point (as shown in formulas (3) to (4) below).

$$C_x = \frac{S_x + E_x}{2} \qquad (3)$$

$$C_y = \frac{S_y + E_y}{2} \qquad\qquad (4)$$

In the formula, $(C_x, C_y)$ represents the above "position representation data of the trajectory center point"; $(S_x, S_y)$ represents the position representation data of the trajectory start point; $S_x$ represents the X-axis value of the trajectory start point under the page coordinate system; $S_y$ represents the Y-axis value of the trajectory start point under the page coordinate system; $(E_x, E_y)$ represents the position representation data of the trajectory end point; $E_x$ represents the X-axis value of the trajectory end point under the page coordinate system; and $E_y$ represents the Y-axis value of the trajectory end point under the page coordinate system.

The above "trajectory length" is used for representing the length of the gift movement trajectory corresponding to the above target gift; and the trajectory length may be determined according to a distance between the above trajectory start point and the above trajectory end point. It should be noted that a calculating method of the distance will not be limited in the present disclosure. For example, it may be implemented by using any known or future method that may calculate a distance between two coordinate points.

The above "trajectory tilt angle" is used for representing a tilt angle of the gift movement trajectory corresponding to the target gift relative to the X-axis in the page coordinate system; and the trajectory tilt angle may be determined according to a slope of a line connecting the trajectory start point and the trajectory end point. It should be noted that a calculating method of the slope will not be limited in the present disclosure; for example, it may be implemented by using any known or future method that may calculate a tilt angle of a straight line.

Step 12: constructing an initial trajectory representation object, according to the position representation data of the above trajectory center point and the above trajectory length.

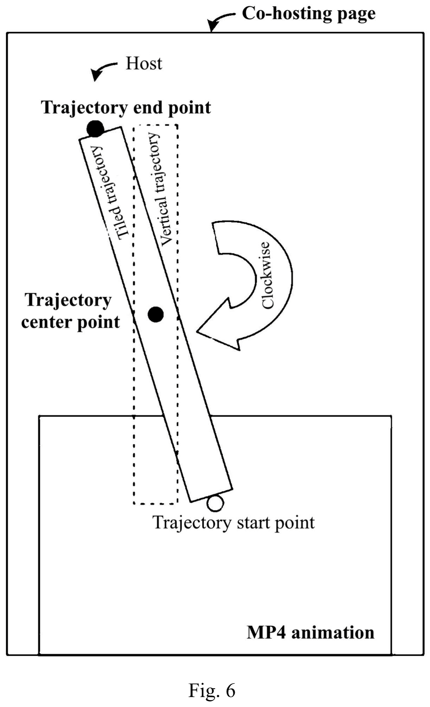

The initial trajectory representation object refers to a trajectory perpendicular to the X-axis in the above page coordinate system (i.e., a vertical trajectory shown in Fig. 6).

In addition, a construction process of the above initial trajectory representation object will not be limited in the present disclosure, for example, it may include step 121 to step 122 below.

Step 121: determining position representation data of a trajectory construction reference point (as shown in formulas (5) to (6) below), according to the position representation data of the above trajectory center point, the above trajectory length, and a preset trajectory width, so that the position representation data of the trajectory construction reference point may represent a position of the upper left corner of the above initial trajectory representation object on the co-hosting page.

$$L_x = C_x - \frac{W_t}{2} = \frac{S_x + E_x - W_t}{2} \qquad\qquad (5)$$

$$L_y = C_y - \frac{H_t}{2} = \frac{S_y + E_y - H_t}{2} \qquad\qquad (6)$$

In the formula, $(L_x, L_y)$ represents the position representation data of the trajectory construction reference point (e.g., the position of the upper left corner of the vertical trajectory shown in Fig. 6 on the co-hosting page); $(C_x, C_y)$ represents the above "position representation data of the trajectory center point"; $(S_x, S_y)$ represents the position representation data of the trajectory start point; $S_x$ represents the X-axis value of the trajectory start point under the page coordinate system; $S_y$ represents the Y-axis value of the trajectory start point under the page coordinate system; $(E_x, E_y)$ represents the position representation data of the trajectory end point; $E_x$ represents the X-axis value of the trajectory end point under the page coordinate system; $E_y$ represents the Y-axis value of the trajectory end point under the page coordinate system; $W_t$ represents the preset trajectory width; and $H_t$ represents the above trajectory length. It should be noted that the preset trajectory width may be set in advance according to application scenarios.

Step 122: constructing an initial trajectory representation object, according to the position representation data of the above trajectory construction reference point, the above trajectory length, and the preset trajectory width, so that the upper left corner of the initial trajectory representation object is located at the trajectory construction reference point (i.e., the position representation data of the upper left corner of the initial trajectory representation object is equal to the position representation data of the trajectory construction reference point), the height of the initial trajectory representation object is equal to the trajectory length, and the width of the initial trajectory representation object is equal to the preset trajectory width. In this way, a rectangular-shaped initial trajectory representation object may be obtained, so that the initial trajectory representation object may represent some features (e.g., features such as a size, a center position, etc.) of the gift movement trajectory corresponding to the target gift.

Step 13: determining a rotation angle corresponding to the initial trajectory representation object, by using the above trajectory tilt angle and an angle conversion formula corresponding to the preset rotation direction.

The preset rotation direction refers to a direction required when rotating the above initial trajectory representation object, and the preset rotation direction will not be limited in the present disclosure; for example, it may refer to a clockwise direction shown in Fig. 6.

The above "angle conversion formula corresponding to the preset rotation direction" is used for converting a tilt angle under the page coordinate system into a rotation angle; and the "angle conversion formula corresponding to the preset rotation direction" may be preset, for example, it may be a formula shown in formula (7) below, which may convert a tilt angle into a rotation angle.

The above "rotation angle corresponding to the initial trajectory representation object" refers to a rotation angle required when rotating the above initial trajectory representation object; and the "rotation angle corresponding to the initial trajectory representation object" may be determined by using formula (7) below.

$$\text{rotation} = (360° + \arctan\frac{E_x - S_x}{E_y - S_y} \times \frac{180°}{\pi} - 90°)\text{mod}360° \quad (7)$$

In the formula, rotation represents the above "rotation angle corresponding to the initial trajectory representation object"; $(S_x, S_y)$ represents the position representation data of the trajectory start point; $S_x$ represents the X-axis value of the trajectory start point under the page coordinate system; $S_y$ represents the Y-axis value of the trajectory start point under the page coordinate system; $(E_x, E_y)$ represents the position representation data of the trajectory end point; $E_x$ represents the X-axis value of the trajectory end point under the page coordinate system; $E_y$ represents the Y-axis value of the trajectory end point under the page coordinate system; and mod represents a remainder operation.

It should be noted that execution timing of step 13 will not be limited in the present disclosure, for example, it may specifically be: execution time of step 13 being later than acquisition time of the above "trajectory tilt angle".

Step 14: rotating the above initial trajectory representation object by the above rotation angle, according to the preset rotation direction, to obtain the target trajectory representation object.

In the present disclosure, after acquiring the initial trajectory representation object (e.g., the vertical trajectory shown in Fig. 6) and the rotation angle corresponding to the initial trajectory representation object in the preset rotation direction (e.g., the clockwise direction shown in Fig. 6) above, the initial trajectory representation object is rotated along the preset rotation direction by a rotation angle (e.g., the rotation angle shown in Fig. 6), to obtain the target trajectory representation object (e.g., the tiled trajectory shown in Fig. 6), so that the target trajectory representation object may represent the trajectory displayed in a tiled manner from the above trajectory start point to the above trajectory end point.

Step 15: generating the trajectory object, according to the above target trajectory representation object.

It should be noted that an implementation of step 15 will not be limited in the present disclosure, for example, it may specifically be: directly determining the above target trajectory representation object as the trajectory object. For another example, in some application scenarios, in order to better improve the trajectory display effect, step 15 may specifically be: performing animation synthesis on the target trajectory representation object, according to the preset animation effect, after acquiring the above target trajectory representation object, to obtain the trajectory object corresponding to the target trajectory representation object, so that the trajectory object may represent a dynamic display effect presented by the target trajectory representation object when displayed according to the preset animation effect. The preset animation effect may be set in advance according to application scenarios.

Based on the relevant content of step 11 to step 15 above, it may be known that with respect to the target gift, after determining the trajectory start point and the trajectory end point corresponding to the target gift (e.g., the trajectory start point and the trajectory end point shown in Fig. 6), a trajectory object may be constructed based on the position representation data of the trajectory start point and the position representation data of the trajectory end point, so that the trajectory object may represent the trajectory animation tiled from the trajectory start point to the trajectory end point, and thus the trajectory object may more clearly and figuratively represent the movement trajectory of the target gift on the co-hosting page.

It should be noted that a display order of the "target gift", the "animation effect object" and the "trajectory object" in the above S3 will not be limited in the present disclosure; for example, display time of the trajectory object is earlier than or equal to movement start time of the target gift, and display time of the animation effect object is earlier than or equal to appearance time of the target gift.

Based on the relevant content of S1 to S3 above, it may be seen that with respect to the method of interacting provided by the embodiment of the present disclosure, when the client is displaying the co-hosting page, and the co-hosting page includes a user display interface of at least one co-hosting user, after receiving a gift sending request triggered for the target user of these co-hosting users and used for requesting to send the target gift to the target user, the client displays the target gift, the animation effect object (e.g., the MP4 animation, etc.) corresponding to the target gift, and the trajectory object corresponding to the target gift. The trajectory object is used for displaying the gift movement trajectory corresponding to the target gift, so that the user display interface in which the target gift gradually moves along the trajectory object toward the target user is displayed on the co-hosting page, which enriches gift interaction and improves user experience.

It may be seen that the above trajectory object is used for describing the gift movement trajectory corresponding to the target gift, so that the trajectory object may not only clearly display the trajectory start point and the trajectory end point involved in the gift movement trajectory, but also clearly display an actual movement route of the target gift on the co-hosting page. In addition, a display moment of the trajectory object is earlier than or equal to a movement start moment of the above target gift, so the trajectory object may display the actual movement route of the target gift to the user in advance, so that the user may know in advance the trajectory along which the target gift moves to the end position, which is favorable for improving user experience.

Actually, in some application scenarios, the same gift may be simultaneously sent to a plurality of co-hosting users. Therefore, in order to better improve a gift sending effect (especially improve gift sending display efficiency), the present disclosure further provides a possible implementation of the above method of interacting, which may specifically include step 31 to step 33 below.

Step 31: displaying the co-hosting page, the co-hosting page including a user display interface of at least one co-hosting user.

It should be noted that the relevant content of the above S1 may be referred to for relevant content of step 31.

Step 32: receiving a gift sending request triggered for N target users of the at least one co-hosting user, where N is a positive integer.

It should be noted that relevant content of step 32 is similar to the above S2, and for brevity, no details will be repeated here.

Step 33: displaying N target gifts, one animation effect object displayed corresponding to the target gifts, and N trajectory objects corresponding to the target gifts. Trajectory start points corresponding to the respective trajectory objects are located in the same position, and trajectory end points corresponding to the respective trajectory objects are respectively determined according to positions of user display interfaces of the respective target users.

The n-th target gift refers to a gift sent to the n-th target user.

The n-th trajectory object is used for describing a gift movement trajectory corresponding to the above n-th target gift; a trajectory start point involved in the n-th trajectory object is located within the above "display region of the animation effect object", a trajectory end point involved in the n-th trajectory object is determined according to a position of a user display interface of the n-th target user (e.g., the trajectory end point involved in the n-th trajectory object is located within the user display interface of the n-th target user, etc.), so that after completing a display process for the n-th trajectory object, the n-th target gift is displayed within the user display interface of the n-th target user, so that the n-th target gift may dynamically represent that a receiver of the n-th target gift is the n-th target user, where n is a positive integer, n≤N, and N is a positive integer.

Actually, after receiving the gift sending request triggered for the N target users, it may be determined that one target gift needs to be sent to each target user. Each target gift corresponds to the same animation effect object, and thus, in order to save page display resources, only one animation effect object (e.g., the MP4 animation shown in Fig. 2) may be displayed on the co-hosting page, so that subsequently a target gift that needs to be received by each target user may be emitted by means of the animation effect object. In this way, a purpose that a plurality of gift sending processes share the same animation effect object may be achieved, which may effectively avoid resource waste caused by repeatedly loading the animation effect object, and is further favorable for improving the gift sending display effect.

In addition, in order to better reduce a gift sending duration, after displaying one animation effect object on the co-hosting page, trajectory objects corresponding to all target gifts (e.g., all tiled trajectory animations shown in Fig. 2) may be displayed simultaneously on the co-hosting page, so that the trajectory start points involved in these trajectory objects are all located in the same position within the animation effect object (e.g., a gift emission point shown in Fig. 2), which may indicate that these target gifts all start moving from the same position.

In addition, in order to better reduce the gift sending duration, all target gifts may be displayed simultaneously on the co-hosting page, so that these target gifts may simultaneously start moving along trajectory objects corresponding to the target gifts, which may improve the gift sending efficiency and display effect.

Based on the relevant content of step 31 to step 33 above, it may be seen that when selecting to respectively send target gifts to a plurality of target users, sending display processes of these target gifts may be displayed simultaneously on the co-hosting page, which may improve the gift sending efficiency and display effect. In addition, these target gifts share the same animation effect object on the co-hosting page, which may effectively avoid resource waste caused by repeatedly loading the animation effect object, and is further favorable for improving the gift sending display effect.

Actually, in order to better improve user experience, the animation effect object, the n-th trajectory object and the n-th target gift above may all be implemented by using animation data, which is favorable for improving user visual experience.

However, when a large number of animations are played simultaneously, stutter may occur, which affects user experience. Therefore, in order to better improve user experience, the present disclosure further provides a possible implementation of a display process of any piece of animation data (e.g., the animation effect object, the n-th trajectory object, or the n-th target gift above). In this implementation, when the above method of interacting is applied to any terminal device, when at least one frame of animation image corresponding to the animation data is stored in a preset storage space of the terminal device, the display process of the animation data may specifically be: reading the at least one frame of animation image corresponding to the animation data from the preset storage space and displaying the at least one frame of animation image, which may effectively avoid resource pressure caused by executing the step of converting an animation instance corresponding to the animation data into the at least one frame of animation image corresponding to the animation data, thereby effectively reducing resource pressure on the terminal device and further effectively avoiding occurrence of stutter. This is favorable for improving the gift sending display effect.

The preset storage space refers to a unit that exists in the terminal device and has data storage functions; moreover, the preset storage space will not be limited in the present disclosure, for example, it may be implemented by means of cache.

In addition, the above storage process of the "at least one frame of animation image corresponding to the animation data" will not be limited in the present disclosure, for example, it may specifically include step 41 to step 43 below.

Step 41: acquiring the animation instance corresponding to the target animation data.

The target animation data refers to animation data that needs to be processed, so that the target animation data may be used for representing any one piece of animation data above. For example, the target animation data may be the animation effect object, the n-th trajectory object, or the n-th gift representation object above, etc.

The animation instance corresponding to the target animation data is used for describing what the target animation data is in particular; and the animation instance will not be limited in the present disclosure.

Step 42: performing frame animation decoding processing on the animation instance corresponding to the target animation data, to obtain the at least one frame of animation image corresponding to the target animation data.

Frame animation decoding processing is used for decoding an animation instance into a multiframe bitmap; moreover, the frame animation decoding processing will not be limited in the present disclosure.

The above "at least one frame of animation image corresponding to the target animation data" is used for describing image data included in the target animation data.

Step 43: storing the at least one frame of animation image corresponding to the target animation data into the preset storage space.

In the present disclosure, after obtaining the at least one frame of animation image corresponding to the target animation data, the at least one frame of animation image may be directly stored into the preset storage space, so that subsequently these animation images may be directly read from the preset storage space. In this way, it may effectively avoid resource pressure caused by multiple times of processing such as loading and decoding for the same animation data within a short period of time, which is favorable for improving the sending display effect achieved by sending a plurality of gifts simultaneously.

Based on the relevant content of step 41 to step 43 above, it may be seen that in some application scenarios (e.g., when sending the same gift to a plurality of co-hosting participators simultaneously), firstly some animation data may be stored by means of the storage space of the terminal device; and then the stored animation data is multiplexed multiple times, to complete gift sending display processes for a plurality of co-hosting participators simultaneously sending the same gift. In this way, it may effectively avoid occurrence of stutter and effectively improve the gift sending display effect.

In addition, in order to better understand the relevant content of step 41 to step 43 above, it will be illustrated below in conjunction with a scenario example.

As an example, when the method of interacting provided by the present disclosure is applied to the terminal device, the process of simultaneously playing a plurality of pieces of animation data by the terminal device by means of a known framework involves technical details shown in (1) to (6) below.

(1) Creating a private cache object in the terminal device, specifying a cache size and a cache strategy, and establishing mapping relationships between various animation data and the private cache object.
(2) Fixing a cache keyword, to ensure that the cache keyword corresponding to the same frame of animation image is the same, when the same animation data is played multiple times.
(3) Injecting the cached object into the animation instance, so that a frame bitmap will be stored in custom cache, with the frame animation decoding processing for the animation instance.
(4) Multiplexing the frame bitmap cache when playing the above animation data again, decoding actions no longer occurring, so as to effectively reduce resource consumption.
(5) Pre-decoding before playing the animation data for the first time, to reduce stutter when playing the animation for the first time.
(6) Clearing the cache and releasing memory footprint of the cache, after the gift is fully displayed, to reduce resource pressure on the terminal device.

Based on the relevant content of (1) to (6) above, it may be seen that in one possible implementation, when simultaneously sending the same gift to a plurality of co-hosting participators, all animation data involved in gift sending display may be played by means of a known framework, to achieve a purpose of reducing resource consumption.

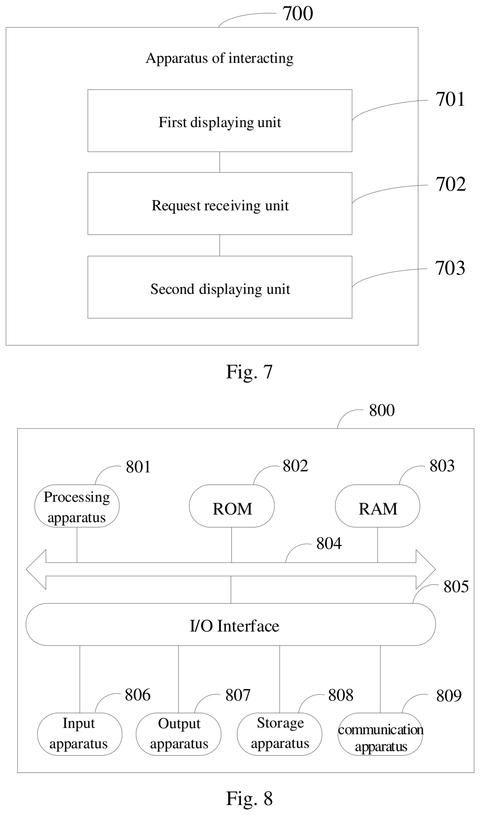

Based on the method of interacting provided by the embodiment of the present disclosure, an embodiment of the present disclosure further provides an apparatus of interacting, which will be explained and illustrated below in conjunction with Fig. 7. Fig. 7 is a structural schematic diagram of the apparatus of interacting provided by the embodiment of the present disclosure. It should be noted that the relevant content of the above method of interacting may be referred to for technical details of the apparatus of interacting provided by the embodiment of the present disclosure.

As shown in Fig. 7, the apparatus 700 of interacting provided by the embodiment of the present disclosure includes:

A first displaying unit 701, configured to display a co-hosting page, the co-hosting page including a user display interface of at least one co-hosting user;

A request receiving unit 702, configured to receive a gift sending request triggered for a target user of the at least one co-hosting user, the gift sending request being used for requesting to send a target gift to the target user;

A second displaying unit 703, configured to display the target gift, an animation effect object corresponding to the target gift, and a trajectory object corresponding to the target gift. The trajectory object is used for displaying a gift movement trajectory corresponding to the target gift; a trajectory start point of the gift movement trajectory is located within a display region of the animation effect object, and a trajectory end point of the gift movement trajectory is determined according to a position of a user display interface of the target user.

In one possible implementation, position representation data of the trajectory start point is determined according to a display scaling ratio of the animation effect object, actual display position coordinates of the animation effect object under a page coordinate system corresponding to the co-hosting page, and preset position coordinates of the trajectory start point under an object coordinate system corresponding to the animation effect object.

In one possible implementation, the display scaling ratio is determined according to an actual display size of the animation effect object on the co-hosting page and a preset size of the animation effect object.

In one possible implementation, the apparatus 700 of interacting further includes:

A position determining unit, configured to scale the preset position coordinates of the trajectory start point under the object coordinate system, according to the display scaling ratio, to obtain scaled position coordinates, the object coordinate system being constructed based on the animation effect object having the preset size; and perform coordinate system conversion processing on the scaled position coordinates by using the actual display position coordinates of the animation effect object under the page coordinate system, to obtain the position representation data of the trajectory start point.

In one possible implementation, the apparatus 700 of interacting further includes:

A trajectory determining unit, configured to determine position representation data of a trajectory center point, a trajectory length, and a trajectory tilt angle, according to the position representation data of the trajectory start point and the position representation data of the trajectory end point; constructing an initial trajectory representation object according to the position representation data of the trajectory center point and the trajectory length; determining a rotation angle corresponding to the initial trajectory representation object, by using the trajectory tilt angle; rotating the initial trajectory representation object by the rotation angle, to obtain the target trajectory representation object; and generating the trajectory object, according to the target trajectory representation object.

In one possible implementation, the trajectory tilt angle is determined according to a slope of a line connecting the trajectory start point and the trajectory end point;
and/or,

The trajectory length is determined according to a distance between the trajectory start point and the trajectory end point.

In one possible implementation, the count of target users is N, where N is a positive integer;

The second displaying unit 703 is specifically configured to: display N target gifts, one animation effect object, and N trajectory objects; wherein trajectory start points corresponding to the respective trajectory objects are located in the same position, and trajectory end points corresponding to the respective trajectory objects are respectively determined according to positions of the user display interfaces of the respective target users.

In one possible implementation, the method of interacting is applied to the terminal device; and at least one of the group consisting of the animation effect object, the trajectory object or the target gift belongs to animation data;

When at least one frame of animation image corresponding to the respective pieces of animation data is stored in the preset storage space of the terminal device, the second displaying unit 703 is specifically configured to: read the at least one frame of animation image corresponding to the respective pieces of animation data from the preset storage space and display the at least one frame of animation image.

In one possible implementation, the apparatus 700 of interacting further includes:

A data storage unit, configured to acquire animation instances corresponding to the respective pieces of animation data; perform frame animation decoding processing on the respective animation instances, to obtain the at least one frame of animation image corresponding to the respective pieces of animation data; and store the at least one frame of animation image corresponding to the respective pieces of animation data into the preset storage space.

In one possible implementation, the trajectory object is a trajectory animation displayed in a tiled manner from the trajectory start point to the trajectory end point;

and/or,

The display region of the animation effect object is a bottom center region of the co-hosting page.

Based on the relevant content of the above-described apparatus 700 of interacting, it may be seen that with respect to the apparatus 700 of interacting provided by the embodiment of the present disclosure, when the apparatus 700 of interacting is displaying the co-hosting page, and the co-hosting page includes a user display interface of at least one co-hosting users, after receiving the gift sending request triggered for the target user of these co-hosting users and used for requesting to send the target gift to the target user, the apparatus 700 of interacting displays the target gift, the animation effect object (e.g., an MP4 animation, etc.) corresponding to the target gift and the trajectory object corresponding to the target gift. The trajectory object is used for displaying the gift movement trajectory corresponding to the target gift, so that the user display interface in which the target gift gradually moves along the trajectory object toward the target user is displayed on the co-hosting page, which may clearly indicate the process of sending the target gift to the target user.

It may be seen that the above trajectory object is used for describing the gift movement trajectory corresponding to the target gift, so that the trajectory object may not only clearly display the trajectory start point and the trajectory end point involved in the gift movement trajectory, but also clearly display an actual movement route of the target gift on the co-hosting page.

In addition, a display moment of the trajectory object is earlier than or equal to a movement start moment of the above target gift, and thus the trajectory object may display the actual movement route of the target gift to the user in advance, so that the user may know in advance the trajectory along which the target gift moves to the end position, which is favorable for improving user experience.

In addition, an embodiment of the present disclosure further provides an electronic device; the device includes a processor and a memory: the memory is configured to store instructions or computer programs; and the processor is configured to execute the instructions or the computer programs in the memory, so that the electronic device execute any implementation of the method of interacting provided by the embodiment of the present disclosures.

Referring to Fig. 8, Fig. 8 illustrates a schematic structural diagram of an electronic device 500 suitable for implementing some embodiments of the present disclosure. The electronic devices in some embodiments of the present disclosure may include but are not limited to mobile terminals such as a mobile phone, a notebook computer, a digital broadcasting receiver, a personal digital assistant (PDA), a portable Android device (PAD), a portable media player (PMP), a vehicle-mounted terminal (e.g., a vehicle-mounted navigation terminal), a wearable electronic device or the like, and fixed terminals such as a digital TV, a desktop computer, or the like. The electronic device illustrated in FIG. 5 is merely an example, and should not pose any limitation to the functions and the range of use of the embodiments of the present disclosure.

As illustrated in Fig. 8, the electronic device 800 may include a processing apparatus 801 (e.g., a central processing unit, a graphics processing unit, etc.), which can perform various suitable actions and processing according to a program stored in a read-only memory (ROM) 802 or a program loaded from a storage apparatus 808 into a random-access memory (RAM) 803. The RAM 803 further stores various programs and data required for operations of the electronic device 800. The processing apparatus 801, the ROM 802, and the RAM 803 are interconnected by means of a bus 804. An input/output (I/O) interface 805 is also connected to the bus 804.

Usually, the following apparatus may be connected to the I/O interface 805: an input apparatus 806 including, for example, a touch screen, a touch pad, a keyboard, a mouse, a camera, a microphone, an accelerometer, a gyroscope, or the like; an output apparatus 807 including, for example, a liquid crystal display (LCD), a loudspeaker, a vibrator, or the like; a storage apparatus 808 including, for example, a magnetic tape, a hard disk, or the like; and a communication apparatus 809. The communication apparatus 809 may allow the electronic device 800 to be in wireless or wired communication with other devices to exchange data. While Fig. 8 illustrates the electronic device 800 having various apparatuses, it should be understood that not all of the illustrated apparatuses are necessarily implemented or included. More or fewer apparatuses may be implemented or included alternatively.

Particularly, according to some embodiments of the present disclosure, the processes described above with reference to the flowcharts may be implemented as a computer software program. For example, some embodiments of the present disclosure include a computer program product, which includes a computer program carried by a non-transitory computer-readable medium. The computer program includes program codes for performing the methods shown in the flowcharts. In such embodiments, the computer program may be downloaded online through the communication apparatus 809 and installed, or may be installed from the storage apparatus 808, or may be installed from the ROM 802. When the computer program is executed by the processing apparatus 801, the above-mentioned functions defined in the methods of some embodiments of the present disclosure are performed.

The electronic device provided by the embodiments of the present disclosure belongs to the same inventive concept as the method provided by the above embodiments. Technical details not described in detail in the embodiment can be refer to the above embodiments, and the embodiment has the same beneficial effects as the above embodiment.

The present disclosure provides a computer-readable medium, having instructions or computer programs stored therein. The instructions or the computer programs, when running on a device, cause the device to execute the method of interacting provided by the embodiments of the present disclosure.

It should be noted that the above-mentioned computer-readable medium in the present disclosure may be a computer-readable signal medium or a computer-readable storage medium or any combination thereof. For example, the computer-readable storage medium may be, but not limited to, an electric, magnetic, optical, electromagnetic, infrared, or semiconductor system, apparatus or device, or any combination thereof. More specific examples of the computer-readable storage medium may include but not be limited to: an electrical connection with one or more wires, a portable computer disk, a hard disk, a random-access memory (RAM), a read-only memory (ROM), an erasable programmable read-only memory (EPROM or flash memory), an optical fiber, a compact disk read-only memory (CD-ROM), an optical storage device, a magnetic storage device, or any appropriate combination of them. In the present disclosure, the computer-readable storage medium may be any tangible medium containing or storing a program that can be used by or in combination with an instruction execution system, apparatus or device. In the present disclosure, the computer-readable signal medium may include a data signal that propagates in a baseband or as a part of a carrier and carries computer-readable program codes. The data signal propagating in such a manner may take a plurality of forms, including but not limited to an electromagnetic signal, an optical signal, or any appropriate combination thereof. The computer-readable signal medium may also be any other computer-readable medium than the computer-readable storage medium. The computer-readable signal medium may send, propagate or transmit a program used by or in combination with an instruction execution system, apparatus or device. The program code contained on the computer-readable medium may be transmitted by using any suitable medium, including but not limited to an electric wire, a fiber-optic cable, radio frequency (RF) and the like, or any appropriate combination of them.

In some implementation modes, the client and the server may communicate with any network protocol currently known or to be researched and developed in the future such as hypertext transfer protocol (HTTP), and may communicate (via a communication network) and interconnect with digital data in any form or medium. Examples of communication networks include a local area network (LAN), a wide area network (WAN), the Internet, and an end-to-end network (e.g., an ad hoc end-to-end network), as well as any network currently known or to be researched and developed in the future.

The above-mentioned computer-readable medium may be included in the above-mentioned electronic device, or may also exist alone without being assembled into the electronic device.

The above-mentioned computer-readable medium carries one or more programs, and when the one or more programs are executed by the electronic device, the electronic device is caused to execute the above method.

The computer program codes for performing the operations of the present disclosure may be written in one or more programming languages or a combination thereof. The above-mentioned programming languages include but are not limited to object-oriented programming languages such as Java, Smalltalk, C++, and also include conventional procedural programming languages such as the "C" programming language or similar programming languages. The program code may be executed entirely on the user's computer, partly on the user's computer, as a stand-alone software package, partly on the user's computer and partly on a remote computer, or entirely on the remote computer or server. In the scenario related to the remote computer, the remote computer may be connected to the user's computer through any type of network, including a local area network (LAN) or a wide area network (WAN), or the connection may be made to an external computer (for example, through the Internet using an Internet service provider).

The flowcharts and block diagrams in the accompanying drawings illustrate the architecture, functionality, and operation of possible implementations of systems, methods, and computer program products according to various embodiments of the present disclosure. In this regard, each block in the flowcharts or block diagrams may represent a module, a program segment, or a portion of codes, including one or more executable instructions for implementing specified logical functions. It should also be noted that, in some alternative implementations, the functions noted in the blocks may also occur out of the order noted in the accompanying drawings. For example, two blocks shown in succession may, in fact, can be executed substantially concurrently, or the two blocks may sometimes be executed in a reverse order, depending upon the functionality involved. It should also be noted that, each block of the block diagrams and/or flowcharts, and combinations of blocks in the block diagrams and/or flowcharts, may be implemented by a dedicated hardware-based system that performs the specified functions or operations, or may also be implemented by a combination of dedicated hardware and computer instructions.

The modules or units involved in the embodiments of the present disclosure may be implemented in software or hardware. Among them, the name of the module or unit does not constitute a limitation of the unit itself under certain circumstances.

The functions described herein above may be performed, at least partially, by one or more hardware logic components. For example, without limitation, available exemplary types of hardware logic components include: a field programmable gate array (FPGA), an application specific integrated circuit (ASIC), an application specific standard product (ASSP), a system on chip (SOC), a complex programmable logical device (CPLD), etc.

In the context of the present disclosure, the machine-readable medium may be a tangible medium that may include or store a program for use by or in combination with an instruction execution system, apparatus or device. The machine-readable medium may be a machine-readable signal medium or a machine-readable storage medium. The machine-readable medium includes, but is not limited to, an electrical, magnetic, optical, electromagnetic, infrared, or semi-conductive system, apparatus or device, or any suitable combination of the foregoing. More specific examples of machine-readable storage medium include electrical connection with one or more wires, portable computer disk, hard disk, random-access memory (RAM), read-only memory (ROM), erasable programmable read-only memory (EPROM or flash memory), optical fiber, portable compact disk read-only memory (CD-ROM), optical storage device, magnetic storage device, or any suitable combination of the foregoing.

It should be noted that the various embodiments in the specification are described in a progressive manner, with each embodiment focusing on its differences from other embodiments. The same and similar parts between the embodiments can be referred to each other. For the system or apparatus disclosed in the embodiments, as it corresponds to the method disclosed in the embodiments, the description is relatively simple, and the description of method part is referred to for relevant part.

It should be understood that in the present disclosure, the term "at least one" refers to a quantity equal to one or more, and the term "a plurality of" refers to a quantity equal to two or more. The term "and/or" is used for describing an association relationship between objects, and indicates three possible relationships. For example, "A and/or B" may indicate a case that there is only A, a case that there is only B, and a case that there are both A and B, where a quantity of A may be one or more, and a quantity of B may be one or more. The symbol "/" generally indicates that a former object and a latter object are associated by an "or" relationship. The term "at least one of" or a similar expression refers to "any combination of', including any combination consisting of a single item or a plurality of items. For example, a statement "at least one of a, b, or c" may indicate a case of "only a", a case of "only b", a case of "only c", a case of "a and b", a case of "a and c", a case of "b and c", or a case of "all of a, b and c", where a, b, and c may be single or plural.

It should be noted that, in this specification, terms like "first" and "second" are only used for differentiating one entity or operation from another, but are not necessarily used for indicating any practical relationship or order between these entities or operations. In addition, the terms "include", "comprise", or any other variants thereof are intended to cover a non-exclusive inclusion, so that a process, a method, a product or a device that includes a list of elements not only includes those elements but also includes other elements that are not expressly listed, or further includes elements inherent to such process, method, product or device. Without more constraints, the elements limited by the statement "including one..." does not exclude that there is another same or identical element in the process, method, product, or device that includes the element.

The steps of the methods or algorithms described in connection with the embodiments disclosed herein may be directly implemented by hardware, software modules executed by a processor, or a combination of both. Software modules can be placed in random access memory (RAM), internal memory, read-only memory (ROM), electrically programmable ROM, electrically erasable programmable ROM, registers, hard disk, removable disk, CD-ROM, or a storage medium in any other manners known in the technical field.

The above description of the embodiments of the present disclosure enables those skilled in the art to implement or use the disclosure. Various modifications to these embodiments will be apparent to those skilled in the art, and the general principles defined here can be implemented in other embodiments without departing from the spirit or scope of the present disclosure. Therefore, the present disclosure will not be limited to the embodiments illustrated here, but will be within the widest scope consistent with the principles and novel features disclosed here.

**Claims**

1. A method of interacting, comprising:

   displaying a co-hosting page, the co-hosting page comprising a user display interface of at least one co-hosting user;
   receiving a gift sending request triggered for a target user of the at least one co-hosting user, the gift sending request being used for requesting to send a target gift to the target user; and
   displaying the target gift, an animation effect object corresponding to the target gift, and a trajectory object corresponding to the target gift; wherein the trajectory object is used for displaying a gift movement trajectory corresponding to the target gift, a trajectory start point of the gift movement trajectory is located within a display region of the animation effect object, and a trajectory end point of the gift movement trajectory is determined according to a position of a user display interface of the target user.

2. The method according to claim 1, wherein position representation data of the trajectory start point is determined according to a display scaling ratio of the animation effect object, actual display position coordinates of the animation effect object under a page coordinate system corresponding to the co-hosting page, and preset position coordinates of the trajectory start point under an object coordinate system corresponding to the animation effect object.

3. The method according to claim 2, wherein a determination process of the display scaling ratio comprises:
   determining the display scaling ratio of the animation effect object, according to an actual display size of the animation effect object on the co-hosting page and a preset size of the animation effect object.

4. The method according to claim 2, wherein a determination process of the position representation data of the trajectory start point, comprises:

   scaling a preset position coordinates of the trajectory start point under the object coordinate system, according to the display scaling ratio, to obtain scaled position coordinates, the object coordinate system being constructed based on the animation effect object having the preset size; and
   performing coordinate system conversion processing on the scaled position coordinates by using the actual display position coordinates of the animation effect object under the page coordinate system, to obtain the position representation data of the trajectory start point, the page coordinate system being constructed for the co-hosting page.

5. The method according to any one of claims 1 to 4, wherein a construction process of the trajectory object comprises:

   determining position representation data of a trajectory center point, a trajectory length, and a trajectory tilt angle, according to the position representation data of the trajectory start point and the position representation data of the trajectory end point;
   constructing an initial trajectory representation object according to the position representation data of the trajectory center point and the trajectory length;
   determining a rotation angle corresponding to the initial trajectory representation object, by using the trajectory tilt angle;
   rotating the initial trajectory representation object by the rotation angle, to obtain a target trajectory representation object; and
   generating the trajectory object, according to the target trajectory representation object.

6. The method according to claim 5, wherein the trajectory tilt angle is determined according to a slope of a line connecting the trajectory start point and the trajectory end point;
   and/or,
   the trajectory length is determined according to a distance between the trajectory start point and the trajectory end point.

7. The method according to claim 1, wherein a count of target users is N, where N is a positive integer;
   the displaying the target gift, an animation effect object corresponding to the target gift, and a trajectory object corresponding to the target gift, comprises:
   displaying N target gifts, one animation effect object, and N trajectory objects; trajectory start points corresponding to the respective trajectory objects being located in the same position, and trajectory end points corresponding to the respective trajectory objects being respectively determined according to positions of the user display interfaces of the respective target users.

8. The method according to any one of claims 1 to 7, wherein the method of interacting is applied to a terminal device;

   at least one of the group consisting of the animation effect object, the trajectory object or the target gift belongs to animation data;
   when at least one frame of animation image corresponding to the respective pieces of animation data is stored in a preset storage space of the terminal device, a display process of the respective pieces of animation data comprises:
   reading the at least one frame of animation image corresponding to the respective pieces of animation data from the preset storage space and displaying the at least one frame of animation image.

9. The method according to claim 8, wherein before the reading the at least one frame of animation image corresponding to the respective pieces of animation data from the preset storage space and displaying the at least one frame of animation image, the method further comprises:

acquiring animation instances corresponding to the respective pieces of animation data;
performing frame animation decoding processing on the respective animation instances, to obtain the at least one frame of animation image corresponding to the respective pieces of animation data; and
storing the at least one frame of animation image corresponding to the respective pieces of animation data into the preset storage space.

10. The method according to claim 1, wherein the trajectory object is a trajectory animation displayed in a tiled manner from the trajectory start point to the trajectory end point;
and/or,
the display region of the animation effect object is a bottom center region of the co-hosting page.

11. An apparatus of interacting, comprising:

a first displaying unit, configured to display a co-hosting page, wherein the co-hosting page comprises a user display interface of at least one co-hosting user;
a request receiving unit, configured to receive a gift sending request triggered for a target user of the at least one co-hosting user, wherein the gift sending request is used for requesting to send a target gift to the target user; and
a second displaying unit, configured to display the target gift, an animation effect object corresponding to the target gift, and a trajectory object corresponding to the target gift; wherein the trajectory object is used for displaying a gift movement trajectory corresponding to the target gift; a trajectory start point of the gift movement trajectory is located within a display region of the animation effect object, and a trajectory end point of the gift movement trajectory is determined according to a position of a user display interface of the target user.

12. An electronic device comprising: a processor and a memory;

the memory is configured to store instructions or computer programs;
the processor is configured to execute the instructions or the computer programs in the memory, so that the electronic device executes the method according to any one of claims 1 to 10.

13. A computer-readable medium, having instructions or computer programs stored therein, wherein the instructions or the computer programs, when running on a device, cause the device to execute the method of any one of claims 1 to 10.

| Present a co-hosting page, wherein the co-hosting page comprises a user presentation interface of at least one co-hosting user | S1 |

| Receive a gift sending request which is triggered for a target user among the at least one co-hosting user, wherein the gift sending request is used for requesting that a target gift is sent to the target user | S2 |

| Present the target gift, an animated-effect object corresponding to the target gift, and a trajectory object corresponding to the target gift, wherein the trajectory object is used for presenting a gift movement trajectory corresponding to the target gift; a trajectory start point of the gift movement trajectory is located within a presentation area of the animated-effect object; and a trajectory end point of the gift movement trajectory is determined according to the position of a user presentation interface of the target user | S3 |

Fig. 1

Fig. 2

Fig. 3

Fig. 4

Fig. 5

Fig. 6

700

Apparatus of interacting

First displaying unit — 701

Request receiving unit — 702

Second displaying unit — 703

Fig. 7

800

Processing apparatus — 801

ROM — 802

RAM — 803

804

I/O Interface — 805

Input apparatus — 806

Output apparatus — 807

Storage apparatus — 808

communication apparatus — 809

Fig. 8

## INTERNATIONAL SEARCH REPORT

| International application No. |
| --- |
| **PCT/CN2024/082241** |

| A. | CLASSIFICATION OF SUBJECT MATTER |
| --- | --- |
| | H04N21/2187(2011.01)i; H04N21/472(2011.01)i; H04N21/4788(2011.01)i; H04N21/431(2011.01)i |

According to International Patent Classification (IPC) or to both national classification and IPC

| B. | FIELDS SEARCHED |
| --- | --- |

Minimum documentation searched (classification system followed by classification symbols)

    IPC: H04N

Documentation searched other than minimum documentation to the extent that such documents are included in the fields searched

Electronic data base consulted during the international search (name of data base and, where practicable, search terms used)

    CNTXT, CNABS, CNKI, DWPI, VEN, USTXT, EPTXT, IEEE, 百度, BAIDU: 直播, 主播, 连麦, 连线, 礼物, 送礼, 赠礼, 打赏, 轨迹, 路线, 路径, 动画, live, microphone connection, gift, track, animation

| C. | DOCUMENTS CONSIDERED TO BE RELEVANT | |
| --- | --- | --- |
| Category* | Citation of document, with indication, where appropriate, of the relevant passages | Relevant to claim No. |
| PX | CN 116546229 A (BEIJING BYTEDANCE NETWORK TECHNOLOGY CO., LTD.) 04 August 2023 (2023-08-04) <br>     claims 1-13 | 1-13 |
| X | CN 115767120 A (BEIJING BYTEDANCE NETWORK TECHNOLOGY CO., LTD.) 07 March 2023 (2023-03-07) <br>     description, paragraphs [0067]-[0265], and figures 3-10 | 1-13 |
| X | CN 111225226 A (GUANGZHOU HUADUO NETWORK TECHNOLOGY CO., LTD.) 02 June 2020 (2020-06-02) <br>     description, paragraphs [0031]-[0163], and figures 3-16 | 1-13 |
| A | CN 113596498 A (GUANGZHOU CUBESILI INFORMATION TECHNOLOGY CO., LTD.) 02 November 2021 (2021-11-02) <br>     entire document | 1-13 |
| A | CN 109194973 A (GUANGZHOU HUADUO NETWORK TECHNOLOGY CO., LTD.) 11 January 2019 (2019-01-11) <br>     entire document | 1-13 |

☑ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **08 May 2024** | **06 June 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2024/082241**

### C.    DOCUMENTS CONSIDERED TO BE RELEVANT

| Category* | Citation of document, with indication, where appropriate, of the relevant passages | Relevant to claim No. |
|---|---|---|
| A | KR 20180108334 A (LG UPLUS CORP.) 04 October 2018 (2018-10-04)<br>entire document | 1-13 |

Form PCT/ISA/210 (second sheet) (July 2022)

**INTERNATIONAL SEARCH REPORT**
Information on patent family members

| | | | International application No.<br>**PCT/CN2024/082241** |
|---|---|---|---|

| Patent document<br>cited in search report | Publication date<br>(day/month/year) | Patent family member(s) | Publication date<br>(day/month/year) |
|---|---|---|---|
| CN 116546229 A | 04 August 2023 | None | |
| CN 115767120 A | 07 March 2023 | None | |
| CN 111225226 A | 02 June 2020 | CN 111225226 B | 07 September 2021 |
| CN 113596498 A | 02 November 2021 | None | |
| CN 109194973 A | 11 January 2019 | None | |
| KR 20180108334 A | 04 October 2018 | KR 101918395 B1 | 13 November 2018 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310274165